**Europäisches Patentamt**

**European Patent Office**

**Office européen des brevets**

(19)

(11) Veröffentlichungsnummer: **0 008 042**
**B1**

(12) # EUROPÄISCHE PATENTSCHRIFT

(45) Veröffentlichungstag der Patentschrift:
05.05.82

(21) Anmeldenummer: **79102668.5**

(22) Anmeldetag: **26.07.79**

(51) Int. Cl.³: **B 60 H 1/00**, G 05 D 23/24

(54) **Anordnung zum Heizen und Lüften von elektrisch angetriebenen Fahrzeugen.**

(30) Priorität: **10.08.78 DE 2835120**

(43) Veröffentlichungstag der Anmeldung:
**20.02.80 Patentblatt 80/4**

(45) Bekanntmachung des Hinweises auf die Patenterteilung:
**05.05.82 Patentblatt 82/18**

(84) Benannte Vertragsstaaten:
**AT CH NL**

(56) Entgegenhaltungen:
**BE-A-566 689**
**CH-A-169 283**
**DE-A-2 524 400**
**DE-A-2 636 195**
**DE-A-2 727 449**
**DE-B-1 159 005**
**FR-A-2 188 121**

(73) Patentinhaber: **SIEMENS AKTIENGESELLSCHAFT Berlin und München, Postfach 22 02 61, D-8000 München 22 (DE)**

(72) Erfinder: **Rapp, Karl, Friedrich-Bauer Strasse 20, D-8520 Erlangen (DE)**
Erfinder: **Elflein, Walter, Saldelsteig 28, D-8520 Erlangen (DE)**
Erfinder: **Choschzick, Joachim, Rennesstrasse 21, D-8520 Erlangen (DE)**
Erfinder: **Breuer, Klaus Dieter, Eschersheimer Landstrasse 552, D-6000 Frankfurt (DE)**
Erfinder: **Roth, Lothar, Triftstrasse 30, D-6000 Frankfurt (DE)**

ACTORUM AG.

## Anordnung zum Heizen und Lüften von elektrisch angetriebenen Fahrzeugen

Die Erfindung bezieht sich auf eine Anordnung zum Heizen und Lüften von elektrisch angetriebenen Fahrzeugen, die einen in den Fahrgastraum führenden Luftkanal und eine vom Fahrgastraum ins Freie führende Öffnung besitzen, wobei der Luftkanal mit einem Lüfter und einem an eine Spannung anschaltbaren Heizwiderstand versehen ist, der abhängig von der Innen- und Aussentemperatur mit Hilfe einer Steuereinrichtung zu- und abgeschaltet wird.

Eine Anordnung dieser Art ist durch die DE-A-2 006 802 bekannt. Zum Heizen dienen in einem Luftkanal angeordnete Heizwiderstände (meist Anfahr- und Bremswiderstände), deren Verlustwärme zum Heizen des Wageninneren ausgenutzt wird. Dabei wird zur Temperaturregelung die Luft über steuerbare Klappen und/oder Mischkammern ganz oder teilweise dem Innenraum zugeführt. Für eine Vor- und Zusatzheizung wird ein Zusatzwiderstand abhängig von der Innen- und Aussentemperatur mit Hilfe einer Steuereinrichtung zu- und abgeschaltet. Dieser Zusatzheizwiderstand gibt also Wärme unter anderem dann ab, wenn die Energie in den Bremswiderständen momentan nicht ausreicht, um die gewünschte Temperatur im Fahrgastraum zu erzielen.

Bei einer anderen durch die BE-A-566 689 bekannten Anordnung zum elektrischen Heizen von Fahrzeugen werden Heizwiderstände aus dem Fahrleitungsnetz gespeist, wobei die Heizenergie durch periodisches Ein- und Ausschalten durch einen Regler abhängig von der Aussentemperatur eingestellt wird.

Aus der CH-A-169 283 ist eine Vorrichtung zum Belüften und Heizen von Räumen bekannt, bei der Luft von einem Ventilator über einen in einem Luftkanal angeordneten Lufterhitzer und Wärmespeicher in den zu beheizenden Raum gedrückt wird. Durch Umstellung von Klappen in dem Kanalsystem ist wahlweise ein reiner Heizbetrieb, Mischluftbetrieb, Umluft-Heizbetrieb oder Frischbetrieb möglich. Die Vorrichtung kann wegen der Speicherung der Wärme im Wärmespeicher auch intermittierend arbeiten, wenn der Ventilator oder Lufterhitzer oder beide gleichzeitig mittels eines Handschalters oder eines Thermostates ab- bzw. eingeschaltet werden.

Es ist auch bekannt, die Bremsenergie zur Heizung zu verwenden (DE-B-1 159 005).

Mit diesen bekannten Einrichtungen lässt sich nicht immer eine befriedigende Regelung der Temperatur der Fahrgasträume und ein vorgegebener Luftdurchsatz im Fahrgastraum erreichen. Die mit den Klappen versehenen Kanäle beanspruchen viel Raum und sind wartungsbedürftig.

Aufgabe der Erfindung ist es, eine abhängig von der Innen- und Aussentemperatur gesteuerte Heizung und Lüftung zu schaffen, bei der man ohne Mischkammern und ohne mechanisch bewegte Klappen sowie ohne Stufung der Heizwiderstände auskommt.

Die Lösung dieser Aufgabe besteht erfindungsgemäss darin, dass der Heizwiderstand in Intervallen zu- und abgeschaltet wird, wobei das Zuschalten des Heizwiderstandes jeweils beim Einsetzen der elektrischen Bremse erfolgt und das Impuls-Pausenverhältnis durch die Steuereinrichtung abhängig von der Innen- und Aussentemperatur verändert wird und dass die Temperaturschwankungen der ins Wageninnere eingeblasenen Luft durch einen Wärmespeicher geglättet werden.

Auf diese Weise kann bei Aufrechterhaltung eines dauernden Luftdurchsatzes die Heizenergie genau dem Wärmebedarf angepasst werden, ohne dass durch die Intervallsteuerung spürbare Temperaturschwankungen im Fahrgastraum auftreten. Durch den Wegfall der Steuerklappen und der Mischkammern wird eine einfache und platzsparende Ausbildung des Luftkanals erreicht. Gegenüber der bekannten Heizeinrichtung, bei der Heizkörper durch periodisches Zu- und Abschalten bei unveränderter Aussentemperatur stets mit einer gleichbleibenden Energiemenge gespeist wird, kann eine gewünschte Fahrgastraumtemperatur unabhängig von der stets wechselnden Anzahl der Fahrgäste gewährleistet werden. Da der Heizwiderstand beim Einsetzen der elektrischen Bremse zugeschaltet wird, bleibt auch bei Nutzbremsung der Vorteil der Verwendung der Bremsenergie für die Heizung erhalten.

Es ist zweckmässig, zur Lüftung des Fahrgastraumes die Richtung des Luftstromes umzukehren. Dies kann ohne Klappen vorgenommen werden, indem die Drehrichtung des Lüftermotors umgekehrt wird.

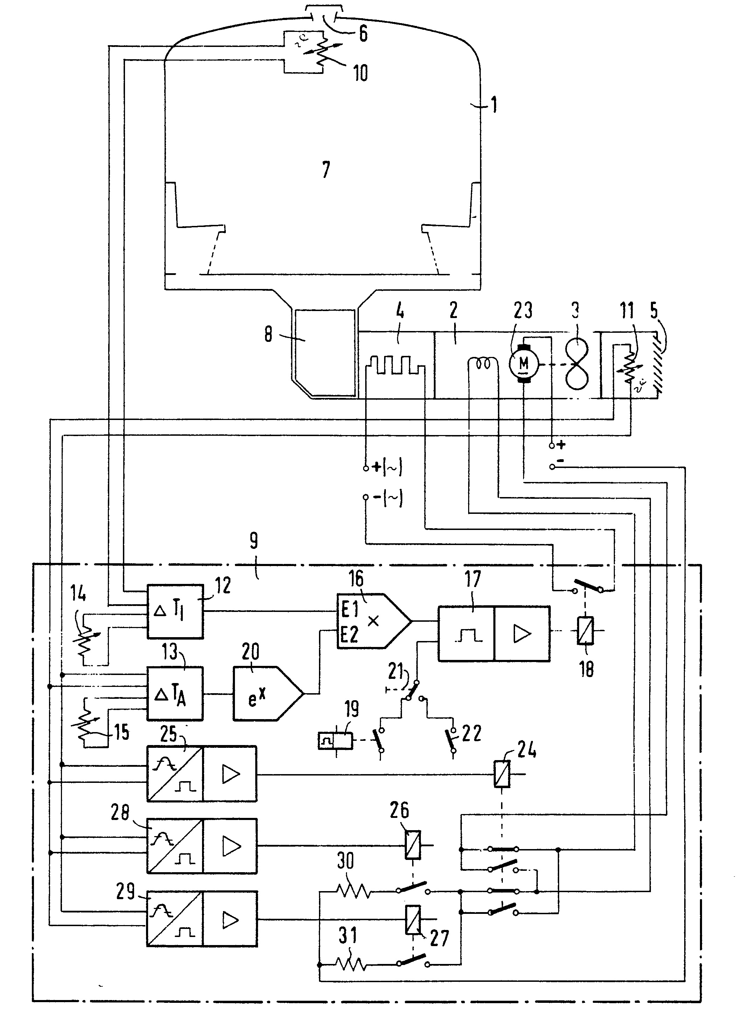

In der Zeichnung ist ein Ausführungsbeispiel der Erfindung dargestellt.

In der Figur ist eine Heizung und Lüftung für ein Nahverkehrsfahrzeug 1 gezeigt, bei dem in einem Luftkanal 2 ein Lüfter 3 und ein Heizwiderstand 4 angeordnet sind. Im Heizbetrieb wird Luft an der Ansaugöffnung 5 angesaugt und durch den Lüfter 3 über den Heizwiderstand 4 in das Wageninnere 7 gedrückt. Durch eine Öffnung 6 im Wagendach kann die verbrauchte Luft entweichen. Der Heizwiderstand 4 wird durch eine Steuereinrichtung 9 in Intervallen zu- und abgeschaltet, wobei das Impuls-Pausenverhältnis abhängig von der Innen- und Aussentemperatur verändert wird. Die Temperaturschwankungen der in das Wageninnere 7 eingeblasenen Luft werden durch einen Wärmespeicher 8 geglättet.

Die Steuereinrichtung 9 hat zum Erfassen der Innen- und Aussentemperatur jeweils getrennte Temperaturfühler 10, 11, deren elektrische Ausgangsgrössen in je einem Vergleichsglied 12 bzw. 13 mit einer durch ein Potentiometer 14, 15 einstellbaren Bezugsspannung verglichen werden. Die Ausgangssignale werden als Spannungen den Eingängen E1, E2 eines Multiplikators 16 zugeführt, der das Produkt aus den beiden Werten bildet. Das Produkt ist ein Mass für die Impulsdauer, während der der Heizwiderstand 4 eingeschaltet ist. Am Ausgang des Multiplikators 16 steht ein dem Produkt entsprechendes Signal an, das einem Taktgeber 17 zugeführt wird, dessen Ausgangssignal nach entsprechender Verstärkung ein Schütz 18 für das Einschalten des Heizwiderstandes 4 steuert. Das Ausgangssignal des Taktgebers 17 steht dabei so lange am Schütz 18 an, wie der Heizwiderstand 4 eingeschaltet sein soll. Die Wiederholung des Einschaltvorganges ist abhängig von der Grösse des Speichers, der zugelassenen Welligkeit der Temperatur der eingeblasenen Luft und der niedrigsten, zu erwartenden Aussentemperatur des Einsatzgebietes des Fahrzeuges. Zur Wiederholung des Einschaltvorganges dient ein Zeitglied 19, das den Taktgeber 17 durch Eingabe eines Startimpulses ansteuert. Der zeitliche Abstand der einzelnen Startimpulse, welche das wiederholte Zuschalten des Heizwiderstandes 4 einleiten, ist in an sich bekannter Weise einstellbar. Bei ausgeführten Anordnungen beträgt die Taktzeit 60 bis 120 sec.

Zweckmässigerweise ist zumindest einem der Eingänge des Multiplikators 16 ein Funktionsgenerator 20 mit nichtlinearer Kennlinie vorgeschaltet. Dadurch kann der Energiebedarf bei verschiedenen Aussentemperaturen berücksichtigt werden.

Für Fahrzeuge mit Nutzbremsung ist es vorteilhaft, den Heizwiderstand 4 nicht abhängig vom Zeitglied 19, sondern abhängig vom Bremssignal jeweils beim Einsetzen der elektrischen Bremse zuzuschalten. Hierzu wird das Zeitglied 19 durch Umlegen eines Schalters 21 abgetrennt und das Signal des Zeitgliedes durch ein beim Bremsen auftretendes Signal ersetzt (Schalter 22 schliesst). Erreicht die Innentemperatur des Nahverkehrsfahrzeuges 1 einen vorgegebenen Temperaturwert von z.B. 18°, so wird das Signal am Eingang E1 des Multiplikators 16 Null und damit auch das Produkt Null und der Taktgeber 17 gibt kein Signal ab, so dass das Schütz 18 für ein oder mehrere Taktperioden nicht einschaltet und zwar so lange, bis das Produkt wieder ungleich Null wird.

Erreicht die Aussentemperatur einen vorgegebenen Wert von z.B. 18°, so wird der Fahrgastraum belüftet. Hierzu wird die Richtung des Luftstromes im Luftkanal umgekehrt. Dies kann in einfacher Weise dadurch geschehen, dass die Drehrichtung des Lüftermotors 23 umgekehrt wird. Hierzu ist dem Lüftermotor 23 ein Wendeschütz 24 vorgeschaltet, das durch einen Grenzwertmelder 25 zum Erfassen der Umschalttemperatur angesteuert wird.

Mit sinkenden Aussentemperaturen muss dem Wageninneren 7 mit der eingeblasenen Luft eine zunehmend grössere Heizenergie zugeführt werden. Es ist daher zweckmässig, den Luftdurchsatz abhängig von der zuzuführenden Heizenergie zu steuern. Hierzu wird die Drehzahl des Lüftermotors 23 über Schütze 26, 27 abhängig von Grenzwertmeldern 28, 29 gesteuert, die die Aussentemperatur erfassen. Die Schütze 26, 27 legen den Lüftermotor 23 über unterschiedliche Vorwiderstände 30, 31 an Spannung.

1 Nahverkehrsfahrzeug
2 Luftkanal
3 Lüfter
4 Heizwiderstand
5 Ansaugöffnung
6 Öffnung im Wagendach
7 Wageninnere
8 Wärmespeicher
9 Steuereinrichtung
10 Temperaturfühler, innen
11 Temperaturfühler, aussen
12 Vergleichsglied
13 Vergleichsglied
14 Potentiometer
15 Potentiometer
16 Multiplikator
17 Taktgeber
18 Schütz
19 Zeitglied
20 Funktionsgenerator
21 Schalter
22 Schalter
23 Lüftermotor
24 Wendeschütz
25 Grenzwertmelder
26 Schütz
27 Schütz
28 Grenzwertmelder
29 Grenzwertmelder
30 Vorwiderstand
31 Vorwiderstand
E1 Eingang
E2 Eingang

**Neue Patentansprüche 1 bis 4**

1. Anordnung zum Heizen und Lüften von elektrisch angetriebenen Fahrzeugen (1), die einen in den Fahrgastraum führenden Luftkanal (2) und eine vom Fahrgastraum ins Freie führende Öffnung (6) besitzen, wobei der Luftkanal (2) mit einem Lüfter (3) und einem an eine Spannung anschaltbaren Heizwiderstand (4) versehen ist, der abhängig von der Innen- und Aussentemperatur mit Hilfe einer Steuereinrichtung (9) zu- und abgeschaltet wird, dadurch gekennzeichnet, dass der Heizwiderstand (4) in Intervallen zu- und abgeschaltet wird, wobei das Zuschalten des Heizwiderstandes (4) jeweils beim Einsetzen der elektrischen Bremse erfolgt und das Impuls-Pausenverhältnis durch die Steuereinrichtung (9) abhängig von der Innen- und Aussentemperatur verändert wird und dass die Temperaturschwankungen der ins Wageninnere (7) eingeblasenen Luft durch einen Wärmespeicher (8) geglättet werden.

2. Anordnung nach Anspruch 1, dadurch gekennzeichnet, dass die Steuereinrichtung (9) zum Erfassen der Innen- und Aussentemperatur jeweils getrennte Temperaturfühler (10, 11) hat, dass deren Ausgangsgrösse jeweils mit einem Bezugswert verglichen und die Differenzwerte als elektrische Signale den Eingängen (E1, E2) eines Multiplikators (16) zugeführt werden, dessen Ausgangssignal die Impulsdauer bestimmt, während der der Heizwiderstand (4) eingeschaltet ist.

3. Anordnung nach Anspruch 2, dadurch gekennzeichnet, dass zumindest einem der beiden Eingänge (E1, E2) des Multiplikators (16) ein Funktionsgenerator (20) mit nichtlinearer Kennlinie vorgeschaltet ist.

4. Anordnung nach einem der vorhergehenden Ansprüche, dadurch gekennzeichnet, dass die Steuereinrichtung (9) abhängig von der Aussentemperatur die Drehzahl und Drehrichtung des Lüftermotors (23) steuert.

## Claims

1. Arrangement for heating and ventilating electrically driven vehicles (1) which have an air channel (2) leading into the passenger cabin and an opening (6) leading from the passenger cabin to the outside, wherein the air channel (2) is provided with a ventilator (3) and a heating resistor (4) which can be connected to a voltage and which in dependence upon the inside and outside temperature is switched on and off with the aid of a control device (9), characterised in that the heating resistor (4) is switched on and off at intervals, where the switching on of the heating resistor (4) is effected when the electric brake engages and the mark-space ratio is varied by the control device (9) in dependence upon the inside and outside temperature, and that the temperature variations of the air blown into the inside (7) of the vehicle are stabilised by a heat store (8).

2. Arrangement as claimed in claim 1, characterised in that the control device (9) has separate temperature sensors (10, 11) for determining the inside and outside temperature, that the output characteristic of the temperature sensors is respectively compared with a reference value and the difference values are fed as electric signals to the inputs (E1, E2) of a multiplier (16) whose output signal determines the pulse duration during which the heating resistor (4) is switched on.

3. Arrangement as claimed in claim 2, characterised in that a function generator (20) having a non-linear characteristic is connected preceding at least one of the two inputs (E1, E2) of the multiplier (16).

4. Arrangement as claimed in one of the preceding claims, characterised in that the control device (9) controls the rate of rotation and the direction of rotation of the ventilator motor (23) in dependence upon the outside temperature.

## Revendications

1. Dispositif pour chauffer et aérer des véhicules (1) entraînés par voie électrique, du type possédant un canal d'air (2) menant à un compartiment des passagers et une ouverture (6) débouchant de ce compartiment dans l'atmosphère, le canal d'air (2) étant pourvu d'un ventilateur (3) et d'une résistance de chauffage (4) susceptible d'être mise sous tension et d'être branchée ou débranchée au moyen d'un dispositif de commande, en fonction de la température intérieure et extérieure, caractérisé par le fait que la résistance de chauffage (4) est branchée et débranchée par intervalles, le branchement de la résistance de chauffage (4) étant opéré lors de la mise en route du frein électrique et le rapport impulsion-pause étant modifié par le dispositif de commande (9) en fonction de la température intérieure et extérieure et par le fait que les variations de la température de l'air envoyé à l'intérieur (7) du véhicule sont lissées à l'aide d'un accumulateur de chaleur (8).

2. Dispositif selon la revendication 1, caractérisé par le fait que le dispositif de commande (9) possède, pour saisir la température intérieure et la température extérieure des sondes de température distinctes, que chacune des grandeurs de sortie de ces dernières est comparée à une valeur de référence et que les valeurs différentielles sont appliquées sous la forme de signaux électriques aux entrées (E1, E2) d'un multiplicateur (16) dont le signal de sortie détermine la durée de l'impulsion pendant laquelle la résistance de chauffage (4) est branchée.

3. Dispositif selon la revendication 2, caractérisé par le fait qu'en amont d'au moins l'une des deux entrées (E1, E2) du multiplicateur (20) est branché un générateur de fonction à caractéristique non-linéaire.

4. Dispositif selon l'une des revendications précédentes, caractérisé par le fait que ledit dispositif de commande (9) règle la vitesse et le sens de rotation du moteur (23) du ventilateur en fonction de la température extérieure.

0 008 042

5